# EUROPEAN PATENT SPECIFICATION

(11) **EP 2 427 676 B1**
(45) Date of publication and mention of the grant of the patent: **18.09.2013**
(21) Application number: 10717098.7
(22) Date of filing: 21.04.2010
(51) Int. Cl.: F16J 15/32, F16J 15/44, F01D 11/02

(54) **SEALING APPARATUS AND METHOD FOR STEAM TURBINES**
DICHTUNGSANORDNUNG UND -VERFAHREN FÜR DAMPFTURBINEN
DISPOSITIF D'ETANCHEITE ET PROCEDE POUR TURBINES A VAPEUR

(30) Priority: 07.05.2009 EP 09006235
(43) Date of publication of application: 14.03.2012
(73) Proprietor: Siemens Aktiengesellschaft, 80333 München (DE)
(72) Inventor: AGARWAL, Abhinav, Gurgaon 122001 (IN); CHOUDHRY, Vivek, Gurgaon 122001 (IN); GUPTA, Abhimanyu, Gurgaon 122001 (IN); VERMA, Ankur, Gurgaon 122001 (IN)
(86) International application number: PCT/EP2010/055238
(87) International publication number: WO 2010/127944

(56) References cited:
- EP-A- 1 967 698
- GB-A- 2 119 037
- JP-A- 59 000 505
- US-A- 4 979 755
- US-A1- 2005 067 789
- US-A1- 2006 220 321

## Description

The present invention relates generally to seals used in steam turbines, and specifically, to a seal apparatus and method for reducing steam swirl.

A steam turbine for the generation of electrical power comprises a stationary housing enclosing a rotating shaft (also referred to as a rotor) and a plurality of radially extending rows of blades affixed to the shaft. Pressurized steam directed onto the blades causes blade and shaft rotation. The serial steam path typically includes a steam inlet, a plurality of steam pressure zones within the turbine and a steam outlet.

To improve turbine efficiency and minimize shaft vibratory motion, it is desirable to avoid steam leakage along the shaft between adjacent zones of differential pressure surrounding the stationary and rotating blade rows. As is well known, non-contacting labyrinth seals are conventionally used in steam turbines at selected axial positions along the length of the rotor to minimize steam leakage between zones of differential pressure. Such labyrinth seals typically include a plurality of spaced-apart annular teeth, also known as seal fins, which extend radially inward from the stationary turbine casing suspended from seal carriers. The distal end of each such seal fin is disposed in close proximity to the rotating surface of the rotor, leaving only a very small clearance therebetween, in order to provide a minimum-leakage seal. These types of seals are utilized to prevent steam from leaking out around the turbine shaft.

A certain amount of steam continuously enters and exits the labyrinth structure with a flow component generally along the shaft in an axial direction. However, the steam flow entering and exiting the labyrinth structure also has a component, typically referred to as "swirl", in the circumferential direction. Circumferential steam flow in the direction of rotor rotation within the seal structure is known to produce lateral forces on the turbine rotor causing asymmetrical pressure gradients to arise in the seal chambers due to which the turbine rotor begins to experience rotational instability. More often than not, however, such rotational instabilities cannot be discovered until the installation of the turbine is complete and a full load cannot be achieved due to the levels of vibration which are usually experienced when attempting to reach full load under conditions conducive to the generation of swirl.

It is known to restrict swirl in steam flow by providing flow dams in the seal structure. However, flow dams used currently are metallic structures affixed to the end of a seal segment, for example by means of threaded fasteners engaged to threaded bores provided on the seal segment. Because such flow dams are metallic, it is difficult to achieve smaller clearances with the rotor shaft, thus limiting the efficiency of the flow dam. Such flow dams are known from e.g. US 2005/067789, US 4, 979, 755 or JP 59000505 which disclose the preambles of claims 1 and 9. The prior art also discloses the use swirl breakers and anti-swirl devices upstream of the seal structure to minimize circumferential steam flow. However, such devices require additional axial space. This is particularly disadvantageous, for example, in blade path seals, where axial space is at a premium. Such a device is known from e.g. US 2006/220321.

It is an object of the present invention to provide an improved sealing apparatus and method for reducing steam swirl in a steam turbine.

The above object is achieved by the features of the present invention set forth in claims 1 and 9.

The underlying idea of the present invention is to utilize axial brush elements to improve steam whirl characteristics of labyrinth seals. Having an axially extending flow dam brush seal element provides lower clearances with the rotating portion than conventional flow dams. Further, since the flow dam brush seal element is disposed applied within the existing seal segments (i.e., between axially adjacently spaced sealing elements of the seal carrier segment), no additional axial space is required. This is particular advantageous in blade path seals, where axial space is an important constraint.

In order to securely fix the flow dam brush seal element between the sealing elements, in one embodiment of the present invention, the proposed seal further comprises a pair of axially extending retaining members disposed between said pair of axially adjacently spaced apart sealing elements of each seal carrier segment for supporting said flow dam brush seal element.

In a preferred embodiment, said pair of axially adjacently spaced apart sealing elements, wherebetween said flow dam brush seal element is disposed, is located at an axially upstream end of the respective seal carrier segment. Having the flow dam at an upstream provides high sealing efficiency for restricting circumferential steam flow.

In one embodiment, said sealing elements comprise axially spaced apart arc-shaped metallic fins. This allows the present invention to be used with standard labyrinth seals.

In another embodiment, upon each said seal carrier segment is disposed an arc-shaped brush seal element as one sealing element, remaining sealing elements comprising arc-shaped metallic fins, each said arc-shaped brush seal element being disposed at axial end of the respective seal carrier segment. Having a brush seal element in the labyrinth structure further improves axial sealing efficiency because of the lower clearances obtained from the arc shaped brush seal elements.

In a further embodiment, each said arc-shaped brush seal element is disposed at said axially upstream end of the respective seal carrier segment, wherein said flow dam brush seal element is disposed between and perpendicular to said arc-shaped brush seal element and an axially adjacently spaced apart arc-shaped metallic fin.

In yet another embodiment, to achieve increased flow damming in case of longer seals, upon each seal carrier segment are disposed multiple flow dams between multiple pairs of axially spaced apart sealing elements.

In one embodiment, for enhanced sealing of axial flow, said seal further comprises a biased backing member for urging each seal carrier segment radially inwardly toward said rotating shaft.

The present invention is further described hereinafter with reference to illustrated embodiments shown in the accompanying drawings, in which:
FIG 1 is a longitudinal sectional view of a labyrinth seal segment, normal to the axis of rotation of a turbine, including a flow dam between metallic seal fins according to a first embodiment the present invention,
FIG 2 is a sectional view of the seal shown in FIG 1 along the section II-II,
FIG 3 is a longitudinal sectional view of a seal segment normal to the axis of rotation of a turbine, including a flow dam between a circumferential brush seal element and a seal fin according to a second embodiment the present invention,
FIG 4 is a sectional view of the seal shown in FIG 2 along the section IV-IV,
FIG 5 is a longitudinal sectional view of a seal segment normal to the axis of rotation of a turbine, including a flow dam at one end and a circumferential brush seal element at the other end, according to a third embodiment the present invention, and
FIG 6 is a sectional view of a seal segment normal to the axis of rotation of a turbine including multiple flow dams according to a fourth embodiment the present invention.

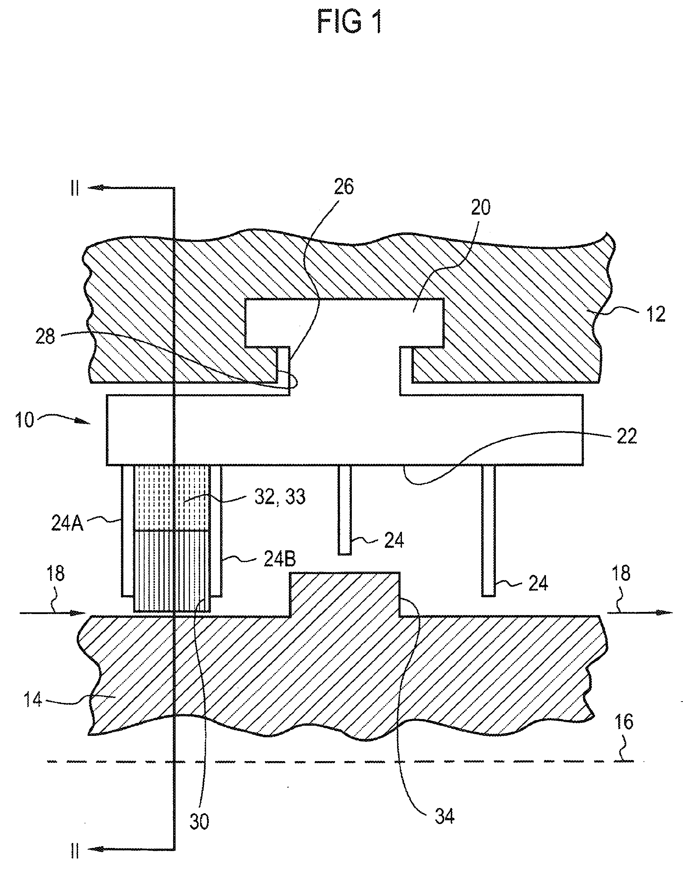

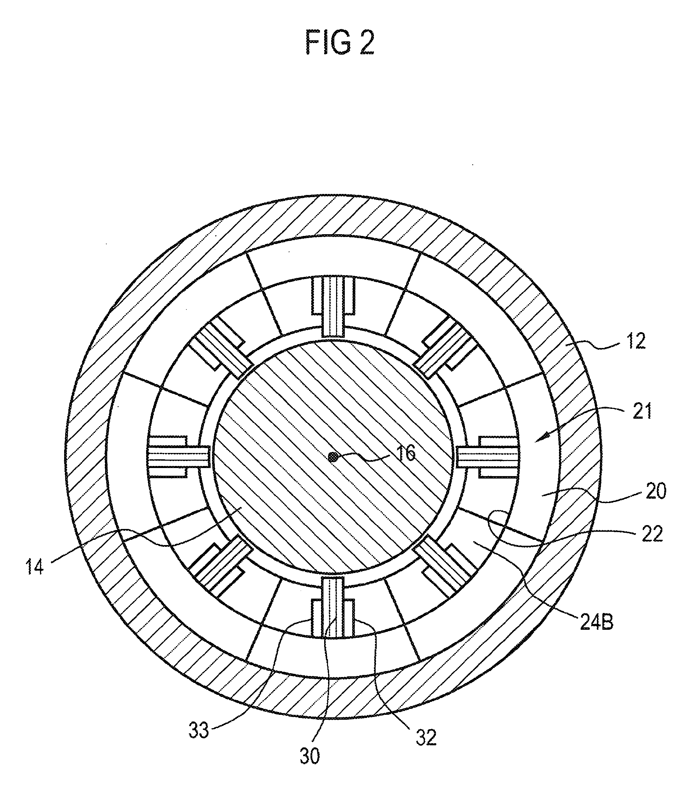

Referring now to the drawings, wherein like characters designate like or corresponding parts throughout the several views, there is shown in FIG 1 and FIG 2 a labyrinth seal structure 10 for a steam turbine according to one embodiment of the present invention. FIG 1 shows a longitudinal sectional view of the seal 10, while FIG 2 shows a sectional view across the section II-II in FIG 1. As shown, the turbine includes a stationary housing 12, through which extends a rotating portion 14 rotatable about an axis 16. While the full turbine rotor is not illustrated, it will be understood that the shaft 14 is but a portion of the rotor which includes a full compliment of flow directing components (e.g., rotating blades) for extracting power of rotation from the motive fluid. The axial direction of steam flow is represented by the arrow 18. In the illustrated embodiment, the stationary portion 12 is a blade ring casing while the rotating portion 14 is a shaft. However, the present invention can be used at the interface of any stationary and rotating portions of a steam turbine, for example, at the interface of the shroud of a rotating blade and the surrounding stationary casing.

The seal 10 includes multiple seal carrier segments 20 attached to the stationary housing 12, being fitted within corresponding grooves 28 provided on the stationary housing 12. The seal carrier segments 20 (eight in number, in this example) are disposed circumferentially adjacently to form a seal ring 21 (FIG 2) that circumferentially encompasses the shaft 14 to minimize fluid leakage between regions of differential pressure through which the shaft 12 extends. As is also conventional, each seal carrier segment 20 may include a biased backing member, such as a spring (not shown) to urge the seal carrier segment 20 radially inward towards the shaft 14. Accordingly, each seal carrier segment 20 further includes shoulder portions 26 in order to limit their inward travel.

Mounted on a radially inner face 22 of each seal carrier segment 20 is a plurality of axially spaced-apart arc-shaped sealing elements 24, 24A, 24B which encircle the shaft 14. In this embodiment, as is conventional in labyrinth seals of this kind, the sealing elements 24,24A, 24B are arc-shaped metallic sealing teeth, also referred to as "seal fins". The seal fins may be made, for example, from stainless steel. The seal fins 24, as is conventional in such labyrinth seals, may be correspondingly mounted opposite raised lands 34 in order to improve the sealing effectiveness of the overall seal 10. Furthermore, the seal fins 24, 24A, 24B are not in contact with the surface of the shaft 14 but nevertheless extend radially inward to within very close proximity thereof to maintain a small working clearance between the shaft 14 and the fins 24, 24A, 24B, thereby providing an effective seal against steam flow.

As is well known, steam flowing circumferentially of the shaft 14 has a highly destabilizing effect on rotor whirl when it is in the same direction as the shaft rotation. In such a case, the rotor can experience rotational instability known as swirl which may be desirably avoided through use of the method and apparatus described herein below.

For the purpose of damming the flow of steam circumferentially about the shaft 14, a flow dam is provided comprising a brush seal element 30 disposed on the inner face 22 of the seal carrier segment 20. The brush seal element 30 extends axially between two axially adjacently spaced apart sealing elements (seal fins, in this example) 24A and 24B and is oriented perpendicularly to these sealing elements. As shown, to provide effective damming, the flow dam bush seal 30 is disposed between the first two sealing elements from the axially upstream end of the seal carrier segment. However, the flow dam brush seal element 30 may be disposed between sealing elements at any other location, depending on the design requirement. Retaining members 32 and 33 are provided to support the flow dam brush seal element 30. The retaining members 32 and 33 are also disposed between the seal fins 24A and 24B. As shown, the flow dam brush seal element 30 extends radially inwardly toward said shaft 12 within a point of close proximity to the shaft 12.

The embodiment described above provides a novel arrangement of a brush seal element (i.e., having an axially extending configuration) to restrict a circumferential component of steam flow about the shaft. With this arrangement, it is possible to achieve clearances (between the flow dam and the shaft) of lower than 0.2 mm, which is not possible in conventional metallic flow dams.

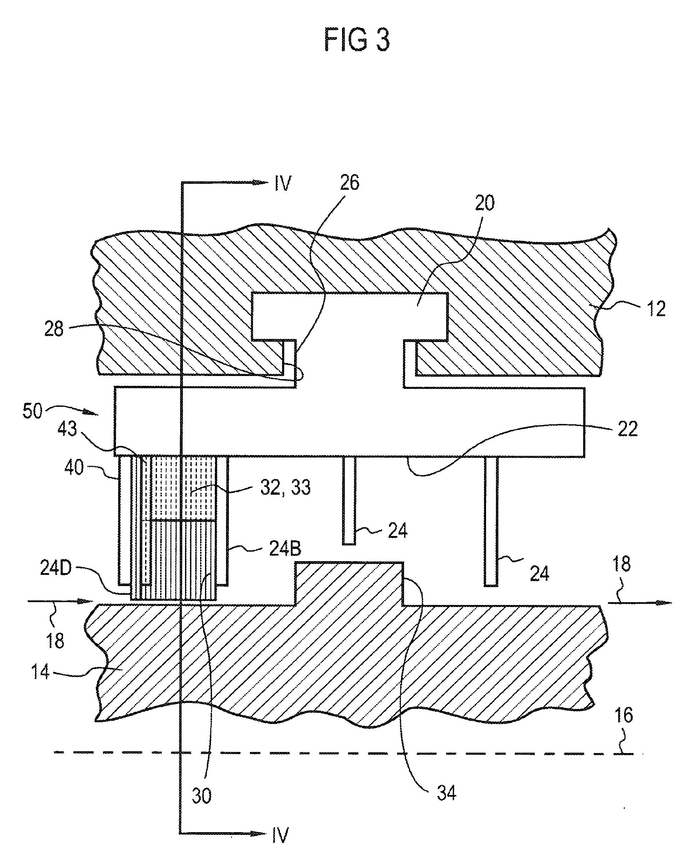

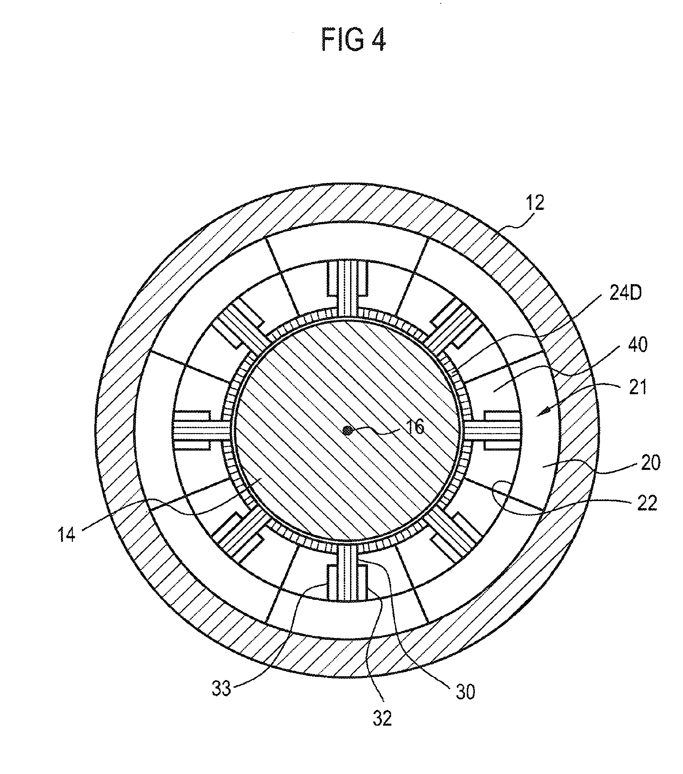

Several modifications of the proposed technique can be contemplated, which can prove advantageous to specific design requirements. For example, the proposed axially extending flow dam brush seal element arrangement can be incorporated with conventional circumferential brush seal element design. FIG 3 and FIG 4 illustrate a seal 50 wherein the seal carrier segment 20 has a plurality of axially spaced apart sealing elements 24, 24B, 24D disposed upon its inner face 22, wherein one of the sealing elements 24D is an arc-shaped (circumferentially extending) brush seal element supported by retaining members 40 and 42. The other sealing elements 24, 24B comprise arc-shaped metallic labyrinth seal fins, of the kind described in the embodiment of FIG 1. Herein, the flow dam brush seal element (axially extending) is disposed between the circumferentially oriented brush seal element 24D and the axially adjacently spaced metallic seal fin 24B. FIG 4 shows a sectional view across the section IV-IV in FIG 3.

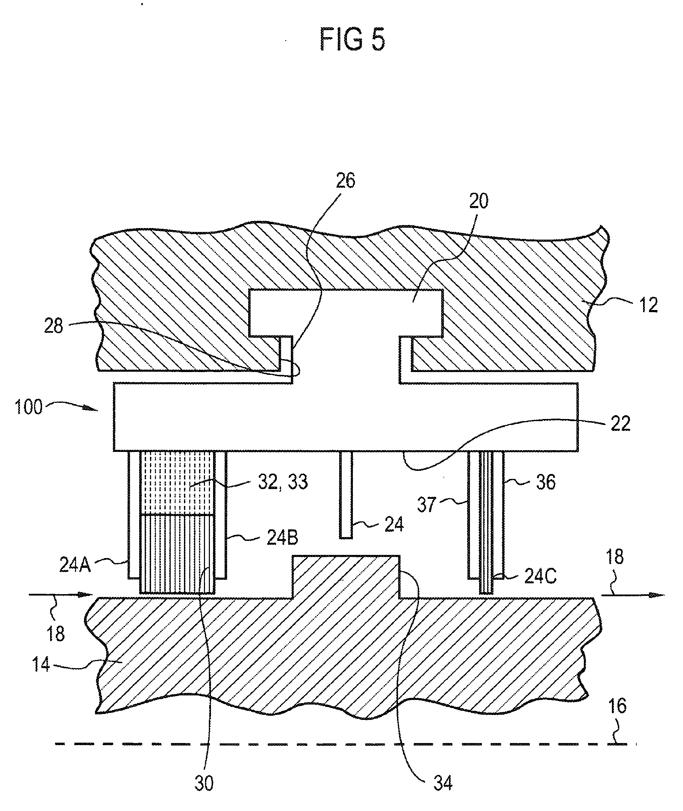

In the above illustrated embodiment, the circumferential brush seal element 24D is located an axially upstream end of the seal carrier segment. Alternately, the circumferential brush seal element may be located at the axially downstream end of the seal carrier segment. FIG 5 illustrates an exemplary seal 100 having a circumferential brush seal element 24C disposed at the downstream end of the seal carrier segment 20, the remaining sealing elements being arc-shaped metallic labyrinth seal fins 24, 24A, 24B. The flow dam brush seal element 30 is disposed at the upstream end between a pair of axially adjacently spaced apart seal fins 24A and 24B.

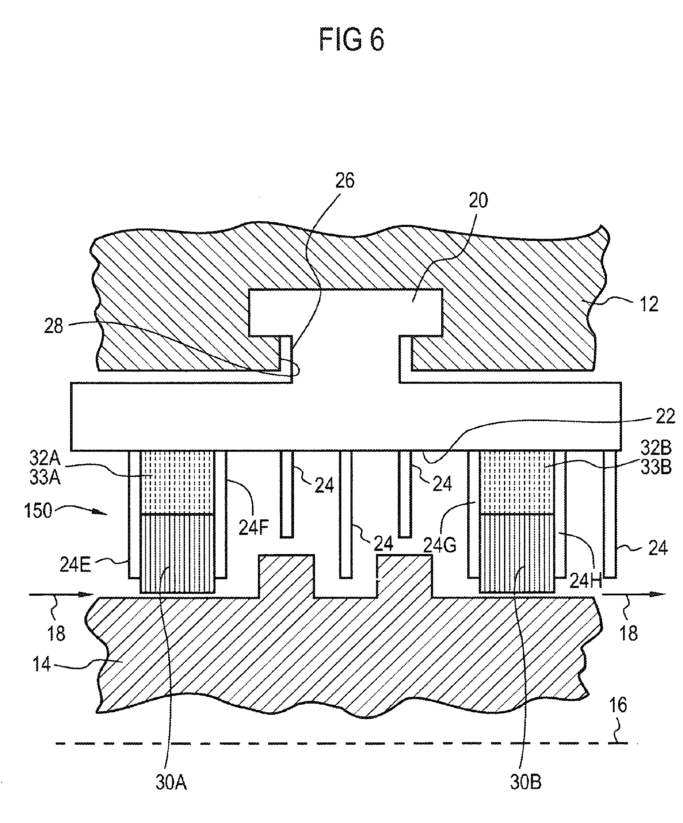

Still further, for longer seals, multiple flow dams may be advantageously used for increased stability against steam swirl. As illustrated in FIG 6, a seal 150 according to yet another embodiment of the present invention includes multiple flow dams 30A, 30B, disposed between multiple pairs of axially spaced apart sealing elements (labyrinth seal fins, in this example) 24E, 24F and 24G, 24H respectively, supported by retaining members 32A,33A and 32B, 33B respectively.

The above-described embodiments of the present invention thus provide new type of flow dam which utilizes axial brush elements to improve steam whirl characteristics of labyrinth/brush seal elements. The present invention is shown to increase rotor stability by reducing the circumferential flow velocity to almost zero inside the seal. Further, the proposed flow dam requires no extra axial space as the flow dam brush seal element can be applied within the existing seal segments. This has a definite advantage over anti swirls / swirl breakers applied at the front of the seal segment, especially so for the blade path seals where the axial spacing is at a premium. The present invention also provides an inexpensive solution as total cost of the proposed flow dam brush seal element is typically a small fraction of one circumferential brush seal element segment. The present invention may find applications at any interface between rotating and stationary components, for example, in the control stage, nozzle chamber, blade path, piston/dummy seals, among others, where steam whirl is a concern. Further, as illustrated, the proposed flow dam brush seal element can be used with standard labyrinth as well as circumferential brush seal elements.

Summarizing, the present invention provides a labyrinth seal apparatus and method for reducing steam swirl in a steam turbine having an annular-shaped stationary portion through which extends a rotating portion rotatable about an axis. The proposed seal comprises a plurality of circumferentially adjacent arc-shaped seal carrier segments adapted to be attached to the stationary portion, to form a seal ring. A plurality of arc-shaped sealing elements are disposed axially spaced apart upon an inner face of each seal carrier segment, wherein each of said plurality of sealing elements extends radially inwardly toward said rotating portion. The proposed seal further includes a flow dam comprising an axially extending brush seal element disposed upon said inner face of each seal carrier segment. The flow dam brush seal element is disposed between and perpendicular to a pair of axially adjacently spaced apart sealing elements. Each said axially extending flow dam brush seal element further extends radially inwardly toward said rotating portion and is adapted to restrict a circumferential component of steam flow about said rotating portion.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the scope of the present invention as defined by the below-mentioned patent claims.

## Claims

1. A labyrinth seal (10, 50, 100, 150) for a steam turbine having an annular-shaped stationary portion (12) through which extends a rotating portion (14) rotatable about an axis (16), said seal (10, 50, 100, 150) comprising:
- a plurality of circumferentially adjacent arc-shaped seal carrier segments (20) adapted to be attached to the stationary portion (12), to form a seal ring (21),
- a plurality of arc-shaped sealing elements (24, 24AH) disposed axially spaced apart upon an inner face (22) of each seal carrier segment (20), wherein each of said plurality of sealing elements (24, 24A-H) extends radially inwardly toward said rotating portion (14), and
- a flow dam, **characterised in that** said flow dam comprises an axially extending brush seal element (30, 30A, 30B) disposed upon said inner face (22) of each seal carrier segment (20), said flow dam brush seal element (30, 30A, 30B) being disposed between and perpendicular to a pair of axially adjacently spaced apart sealing elements (24A, 24B, 24D-H), each said axially extending flow dam brush seal element (30, 30A, 30B) further extending radially inwardly toward said rotating portion (14) and adapted to restrict a circumferential component of steam flow about said rotating portion (14).

2. The seal (10, 50, 100, 150) according to claim 1, further comprising a pair of axially extending retaining members (32, 33, 32A, 33A, 32B, 33B) disposed between said pair of axially adjacently spaced apart sealing elements (24A, 24B, 24D-H) of each seal carrier segment (20) for supporting said flow dam brush seal element (30, 30A, 30B).

3. The seal (10, 50, 100) according to any of the preceding claims, wherein said pair of axially adjacently spaced apart sealing elements (24A, 24B, 24D), wherebetween said flow dam brush seal element (30) is disposed, is located at an axially upstream end of the respective seal carrier segment (20).

4. The seal (10, 150) according to any of the preceding claims, wherein said sealing elements (24, 24A, 24B, 24E-H) comprise axially spaced apart arc-shaped metallic fins.

5. The seal (50, 100) according to any of claims 1 to 3, wherein, upon each said seal carrier segment (20) is disposed an arc-shaped brush seal element (24C, 24D) as one sealing element, remaining sealing elements (24, 24A, 24B) comprising arc-shaped metallic fins, each said arc-shaped brush seal element (24C, 24D) being disposed at axial end of the respective seal carrier segment (20).

6. The seal (50) according to claim 5, wherein each said arc-shaped brush seal element (24D) is disposed at said axially upstream end of the respective seal carrier segment (20), wherein said flow dam brush seal element (30) is disposed between and perpendicular to said arc-shaped brush seal element (24D) and an axially adjacently spaced apart arc-shaped metallic fin (24B).

7. The seal (150) according to any of the preceding claims, wherein upon each seal carrier segment (20) are disposed multiple flow dams (30A, 30B) between multiple pairs of axially spaced apart sealing elements (24E-H).

8. The seal (10, 50, 100, 150) according to any of the preceding claims, further comprising a biased backing member for urging each seal carrier segment (20) radially inwardly toward said rotating rotating portion (14).

9. A method for preventing swirl in a steam turbine having an annular-shaped stationary portion (12) through which extends a rotating portion (14) rotatable about an axis (16), wherein a plurality of circumferentially adjacent arc-shaped seal carrier segments (20) are attached to the stationary portion (12), to form a labyrinth seal ring (21), and wherein a plurality of arc-shaped sealing elements (24, 24A-H) are disposed axially spaced apart upon an inner face (22) of each seal carrier segment (20), wherein each of said plurality of sealing elements (24, 24A-H) extends radially inwardly toward said rotating portion (14), said method comprising:
- damming a flow of steam circumferentially about the rotating portion (14), the method being **characterised by** providing a flow dam comprising an axially extending brush seal element (30, 30A, 30B) disposed upon said inner face (22) of each seal carrier segment (20), said flow dam brush seal element (30, 30A, 30B) being disposed between and perpendicular to a pair of axially adjacently spaced apart sealing elements (24A, 24B, 24D-H), each said axially extending flow dam brush seal element (30, 30A, 30B) further extending radially inwardly toward said rotating portion (14).

10. The method according to claim 9, wherein said damming further comprises providing a pair of axially extending retaining members (32, 33, 32A, 33A, 32B, 33B) disposed between said pair of axially adjacently spaced apart sealing elements (24A, 24B, 24D-H) of each seal carrier segment (20) for supporting said flow dam brush seal element (30, 30A, 30B).

11. The method according to any of claims 9 and 10, wherein said damming comprises disposing said flow dam brush seal element (30) between a pair of axially adjacently spaced apart sealing elements (2A, 24B, 24D) located at an axially upstream end of the respective seal carrier segment (20).

12. The method according to any of claims 9 to 11, wherein said damming comprises disposing multiple flow dams (30A, 30B) between multiple pairs of axially spaced apart sealing elements (24E-H) upon an inner face (22) of each seal carrier segment (20).

## Patentansprüche

1. Labyrinthdichtung (10, 50, 100, 150) für eine Dampfturbine mit einem ringförmigen feststehenden Teil (12), durch den sich ein rotierender Teil (14), der um eine Achse (16) rotierbar ist, erstreckt, wobei die Dichtung (10, 50, 100, 150) Folgendes umfasst:
- mehrere um den Umfang benachbarte, bogenförmige Dichtungsträgersegmente (20) die zur Befestigung an dem feststehenden Teil (12) zwecks Bildung eines Dichtungsrings (21) ausgeführt sind,
- mehrere bogenförmige Dichtungselemente (24, 24A-H), die auf einer Innenfläche (22) jedes Dichtungsträgersegments (20) axial beabstandet angeordnet sind, wobei sich jedes der mehreren Dichtungselemente (24, 24A-H) radial nach innen zu dem rotierenden Teil (14) erstreckt, und
- eine Strömungsstaustelle, **dadurch gekennzeichnet, dass** die Strömungsstaustelle ein sich axial erstreckendes Bürstendichtungselement (30, 30A, 30B) umfasst, das an der Innenfläche (22) jedes Dichtungsträgersegments (20) angeordnet ist, wobei das Strömungsstaustellen-Bürstendichtungselement (30, 30A, 30B) zwischen und senkrecht zu einem Paar axial benachbart beabstandeter Dichtungselemente (24A, 24B, 24D-H) angeordnet ist, wobei sich jedes sich axial erstreckende Strömungsstaustellen-Bürstendichtungselement (30, 30A, 30B) ferner radial nach innen zu dem rotierenden Teil (14) erstreckt und dazu ausgeführt ist, eine Umfangskomponente des Dampfstroms um den rotierenden Teil (14) zu begrenzen.

2. Dichtung (10, 50, 100, 150) nach Anspruch 1, die ferner ein Paar sich axial erstreckender Halteglieder (32, 33, 32A, 33A, 32B, 33B) umfasst, die zwischen dem Paar axial benachbart beabstandeter Dichtungselemente (24A, 24B, 24D-H) jedes Dichtungsträgersegments (20) zur Abstützung des Strömungsstaustellen-Bürstendichtungselements (30, 30A, 30B) angeordnet sind.

3. Dichtung (10, 50, 100) nach einem der vorhergehenden Ansprüche, wobei das Paar axial benachbart beabstandeter Dichtungselemente (24A, 24B, 24D), zwischen denen das Strömungsstaustellen-Bürstendichtungselement (30) angeordnet ist, an einem axial stromaufwärtigen Ende des jeweiligen Dichtungsträgersegments (20) positioniert ist.

4. Dichtung (10, 150) nach einem der vorhergehenden Ansprüche, wobei die Dichtungselemente (24, 24A, 24B, 24E-H) axial beabstandete bogenförmige Metallrippen umfassen.

5. Dichtung (50, 100) nach einem der Ansprüche 1 bis 3, wobei an jedem Dichtungsträgersegment (20) ein bogenförmiges Bürstendichtungselement (24C, 24D) als ein Dichtungselement angeordnet ist, wobei die verbleibenden Dichtungselemente (24, 24A, 24B) bogenförmige Metallrippen umfassen, wobei jedes solche bogenförmige Bürstendichtungselement (24C, 24D) an einem axialen Ende des jeweiligen Dichtungsträgersegments (20) angeordnet ist.

6. Dichtung (50) nach Anspruch 5, wobei jedes solche bogenförmige Bürstendichtungselement (24D) an dem axial stromaufwärtigen Ende des jeweiligen Dichtungsträgersegments (20) angeordnet ist, wobei das Strömungsstaustellen-Bürstendichtungselement (30) zwischen und senkrecht zu dem bogenförmigen Bürstendichtungselement (24D) und einer axial benachbart beabstandeten bogenförmigen Metallrippe (24B) angeordnet ist.

7. Dichtung (150) nach einem der vorhergehenden Ansprüche, wobei an jedem Dichtungsträgersegment (20) mehrere Strömungsstaustellen (30A, 30B) zwischen mehreren Paaren axial beabstandeter Dichtungselemente (24E-H) angeordnet sind.

8. Dichtung (10, 50, 100, 150) nach einem der vorhergehenden Ansprüche, die ferner ein vorgespanntes Trägerglied zum Drücken jedes Dichtungsträgersegments (20) radial nach innen zu dem rotierenden Teil (14) umfasst.

9. Verfahren zum Verhindern von Verwirbelung in einer Dampfturbine mit einem ringförmigen feststehenden Teil (12), durch den sich ein rotierender Teil (14), der um eine Achse (16) rotierbar ist, erstreckt, wobei mehrere um den Umfang benachbarte, bogenförmige Dichtungsträgersegmente (20) an dem feststehenden Teil (12) zwecks Bildung eines Labyrinthdichtungsrings (21) befestigt sind und wobei mehrere bogenförmige Dichtungselemente (24, 24A-H) an einer Innenfläche (22) jedes Dichtungsträgersegments (20) axial beabstandet angeordnet sind, wobei sich jedes der mehreren Dichtungselemente (24, 24A-H) radial nach innen zu dem rotierenden Teil (14) erstreckt, wobei das Verfahren Folgendes umfasst:
- Stauen eines Dampfstroms um den Umfang des rotierenden Teils (14), wobei das Verfahren **gekennzeichnet ist durch** Bereitstellen einer Strömungsstaustelle, die ein sich axial erstreckendes Bürstendichtungselement (30, 30A, 30B) umfasst, das an der Innenfläche (22) jedes Dichtungsträgersegments (20) angeordnet ist, wobei das Strömungsstaustellen-Bürstendichtungselement (30, 30A, 30B) zwischen und senkrecht zu einem Paar axial benachbart beabstandeter Dichtungselemente (24A, 24B, 24D-H) angeordnet wird, wobei sich jedes sich axial erstreckende Strömungsstaustellen-Bürstendichtungselement (30, 30A, 30B) ferner radial nach innen zu dem rotierenden Teil (14) erstreckt.

10. Verfahren nach Anspruch 9, wobei das Stauen weiterhin Bereitstellen eines Paars sich axial erstreckender Halteglieder (32, 33, 32A, 33A, 32B, 33B) umfasst, die zwischen dem Paar axial benachbart beabstandeter Dichtungselemente (24A, 24B, 24D-H) jedes Dichtungsträgersegments (20) zur Abstützung des Strömungsstaustellen-Bürstendichtungselements (30, 30A, 30B) angeordnet sind.

11. Verfahren nach einem der Ansprüche 9 und 10, wobei das Stauen Anordnen des Strömungsstaustellen-Bürstendichtungselements (30) zwischen einem Paar axial benachbart beabstandeter Dichtungselemente (24A, 24B, 24D), die an einem axial stromaufwärtigen Ende des jeweiligen Dichtungsträgersegments (20) positioniert sind, umfasst.

12. Verfahren nach einem der Ansprüche 9 bis 11, wobei das Stauen Anordnen mehrerer Strömungsstaustellen (30A, 30B) zwischen mehreren Paaren axial beabstandeter Dichtungselemente (24E-H) an einer Innenfläche (22) jedes Dichtungsträgersegments (20) umfasst.

## Revendications

1. Joint ( 10, 50, 100, 150 ) à labyrinthe pour une turbine à vapeur ayant une partie ( 12 ) fixe de forme annulaire, dans laquelle s'étend une partie ( 14 ) tournante qui peut tourner autour d'un axe ( 16 ), le joint ( 10, 50, 100, 150 ) comprenant :
- une pluralité de segments ( 20 ) de support de joint en forme d'arc, voisins circonférentiellement et conçus pour être adjoints à la partie ( 12 ) fixe pour former un anneau ( 21 ) d'étanchéité,
- une pluralité d'éléments ( 24, 24A à H ) d'étanchéité en forme d'arc, disposés à distance axialement sur une face ( 22 ) intérieure de chaque segment ( 20 ) de support de joint, chacun de la pluralité d'éléments ( 24, 24A à H ) d'étanchéité s'étendant radialement vers l'intérieur en direction de la partie ( 14 ) tournante, et
- un barrage à l'écoulement, **caractérisé en ce que** le barrage à l'écoulement comprend un élément ( 30, 30A, 30B ) d'étanchéité à brosse s'étendant axialement et disposé sur la face ( 22 ) intérieure de chaque segment ( 20 ) de support de joint, l'élément ( 30, 30A, 30B ) d'étanchéité à brosse du barrage à l'écoulement étant disposé entre une paire d'éléments ( 24A, 24B, 24D à H ) d'étanchéité à distance, en étant voisin axialement et perpendiculairement à cette paire, chaque élément ( 30, 30A, 30B ) de joint à brosse du barrage à l'écoulement s'étendant axialement, s'étendant en outre radialement vers l'intérieur en direction de la partie ( 14 ) tournante et étant conçu pour limiter une composante circonférentielle de l'écoulement de vapeur autour de la partie ( 14 ) tournante.

2. Joint ( 10, 50, 100, 150 ) suivant la revendication 1, comprenant, en outre, une paire d'éléments ( 32, 33, 32A, 33A, 32B, 33B ) de retenue s'étendant axialement et disposés entre la paire d'éléments ( 24A, 24B, 24D à H ) d'étanchéité à distance en étant voisins axialement de chaque segment ( 20 ) de support de joint pour supporter l'élément ( 30, 30A, 30B ) de joint à brosse du barrage à l'écoulement.

3. Joint ( 10, 50, 100 ) suivant l'une quelconque des revendications précédentes, dans lequel la paire d'éléments ( 24A, 24B, 24D ) d'étanchéité à distance en étant voisins axialement, entre lesquels l'élément ( 30 ) du joint à brosse du barrage à l'écoulement est disposé, est placée à une extrémité en amont axialement du segment ( 20 ) du support de joint respectif.

4. Joint ( 10, 150 ) suivant l'une quelconque des revendications précédentes, dans lequel des éléments ( 24, 24A, 24B, 24E à H ) d'étanchéité comprennent des ailettes métalliques en forme d'arc à distance axialement.

5. Joint ( 50, 100 ) suivant l'une quelconque des revendications 1 à 3, dans lequel, sur chaque segment ( 20 ) du support de joint, est disposé un élément ( 24C, 24D ) de joint à brosse en forme d'arc comme l'un des éléments d'étanchéité, les éléments ( 24, 24A, 24B ) d'étanchéité restants comprenant des ailettes métalliques en forme d'arc, chaque élément ( 24C, 24D ) de joint à brosse en forme d'arc étant disposé à une extrémité axiale du segment ( 20 ) du support de joint respectif.

6. Joint ( 50 ) suivant la revendication 5, dans lequel chaque élément ( 24D ) de joint à brosse en forme d'arc est disposé à l'extrémité en amont axialement du segment ( 20 ) du support de joint respectif, l'élément ( 30 ) de joint à brosse du barrage à l'écoulement étant disposé entre l'élément ( 24D ) de joint à brosse en forme d'arc et une ailette ( 24B ) métallique en forme d'arc à distance en étant voisine axialement et perpendiculairement à ceux-ci.

7. Joint ( 150 ) suivant l'une quelconque des revendications précédentes, dans lequel, sur chaque segment ( 20 ) du support de joint, sont disposés de multiples barrages ( 30A, 30B ) à l'écoulement entre des paires multiples d'éléments ( 24E à H ) d'étanchéité à distance axialement.

8. Joint ( 10, 50, 100, 150 ) suivant l'une quelconque des revendications précédentes, comprenant, en outre, un élément d'adossement incliné pour repousser chaque segment ( 20 ) du support de joint radialement vers l'intérieur en direction de la partie ( 14 ) tournante.

9. Procédé pour empêcher le tourbillonnement dans une turbine à vapeur ayant une partie ( 12 ) fixe de forme annulaire, dans laquelle s'étend une partie ( 14 ) tournante pouvant tourner autour d'un axe ( 16 ), dans lequel une pluralité de segments ( 20 ) de support de joint en forme d'arc, voisins circonférentiellement sont adjoints à la partie ( 12 ) fixe pour former un anneau ( 21 ) de joint à labyrinthe et dans lequel une pluralité d'éléments ( 24, 24A à H ) d'étanchéité en forme d'arc sont disposés à distance axialement sur une face ( 22 ) intérieure de chaque segment ( 20 ) du support de joint, dans lequel chacun de la pluralité d'éléments ( 24, 24A à H ) d'étanchéité s'étend radialement vers l'intérieur en direction de la partie ( 14 ) tournante, procédé dans lequel :
- on barre un écoulement de vapeur circonférentiellement autour de la partie ( 14 ) tournante, le procédé étant **caractérisé en ce que** l'on prévoit un barrage à l'écoulement comprenant un élément ( 30, 30A, 30B ) d'étanchéité à brosse s'étendant axialement et disposé sur la face ( 22 ) intérieure de chaque segment ( 20 ) de support de joint, l'élément ( 30, 30A, 30B ) d'étanchéité à brosse du barrage à l'écoulement étant disposé entre une paire d'éléments ( 24A, 24B, 24D à H ) d'étanchéité à distance en étant voisins axialement et perpendiculairement à cette paire, chaque élément ( 30, 30A, 30B ) de joint à brosse du barrage à l'écoulement s'étendant axialement, s'étendant en outre radialement vers l'intérieur en direction de la partie ( 14 ) tournante et étant conçu pour limiter une composante circonférentielle de l'écoulement de vapeur autour de la partie ( 14 ) tournante.

10. Procédé suivant la revendication 9, dans lequel faire barrage comprend, en outre, prévoir une paire d'éléments ( 32, 33, 32A, 33A, 32B, 33B ) de retenue s'étendant axialement et disposés entre la paire d'éléments ( 24A, 24B, 24D à H ) d'étanchéité à distance en étant voisins axialement de chaque segment ( 20 ) de support de joint pour supporter l'élément ( 30, 30A, 30B ) de joint à brosse du barrage à l'écoulement.

11. Procédé suivant l'une quelconque des revendications 9 et 10, dans lequel former un barrage comprend disposer l'élément ( 30 ) du joint à brosse du barrage à l'écoulement entre une paire d'éléments ( 24A, 24B, 24D ) d'étanchéité à distance en étant voisins axialement, placés à une extrémité en amont axialement du segment ( 20 ) du support de joint respectif.

12. Procédé suivant l'une quelconque des revendications 9 à 11, dans lequel faire barrage comprend disposer un barrage ( 30A, 30B ) à l'écoulement multiple entre des paires multiples d'éléments ( 24E à H ) d'étanchéité à distance axialement sur un face ( 22 ) intérieure de chaque segment ( 20 ) du support de joint.
